# EUROPÄISCHE PATENTSCHRIFT

(11) **EP 0 596 150 B1**
(45) Veröffentlichungstag und Bekanntmachung des Hinweises auf die Patenterteilung: **05.02.1997**
(21) Anmeldenummer: 92118804.1
(22) Anmeldetag: 03.11.1992
(51) Int. Cl.: C08G 73/10

(54) **Lösungen von polyimidbildenden Ausgangsstoffen**
Solutions of polyimide precursors
Solutions de précurseurs de polyimides

(43) Veröffentlichungstag der Anmeldung: 11.05.1994
(73) Patentinhaber: BASF Lacke + Farben Aktiengesellschaft, 48136 Münster (DE)
(72) Erfinder: Blum, Rainer, W-6700 Ludwigshafen (DE); Heller, Hans Joachim, Dr., W-2000 Hamburg 55 (DE); Lienert, Klaus, Dr., W-2000 Hamburg 50 (DE)
(74) Vertreter: Karau, Wolfgang, Dr.

(56) Entgegenhaltungen:
- EP-A- 409 777
- EP-A- 0 274 121
- DE-A- 1 937 388
- US-A- 4 533 574
- US-A- 4 960 824

## Beschreibung

Die Erfindung betrifft Lösungen von polyimidbildenden Ausgangsstoffen, enthaltend Diamine und Tetracarbonsäurediester, wobei sich mindestens 2 mol.-% der Estergruppen in den Tetracarbonsäurediestern von Alkoholen der allgemeinen Formel

HO-Z-O-X I

ableiten, worin Z für einen geradkettigen oder verzweigten aliphatischen Rest aus 1 bis 15 Kohlenstoffatomen, welcher durch 1 bis 4 Ethergruppen -O- unterbrochen sein kann und X für einen aromatischen Rest aus 5 bis 20 Kohlenstoffatomen, welcher auch Stickstoff, Sauerstoff oder Schwefel als Heteroatome im aromatischen Ringsystem enthalten kann, steht.

Weiterhin betrifft die Erfindung die Verwendung dieser Lösungen zur Herstellung von Überzügen.

Polyimide werden in zunehmendem Maße zur Beschichtung von metalldrähten, Glas- und Quarzfasern sowie Substraten aus Silicum (Silicium-Wafer) eingesetzt. Insbesondere finden sie Verwendung in der Elektronik und Mikroelektronik z. B. als Zwischen- oder Deckschichten beim Aufbau von Schaltungen.

Die Substrate werden dabei im allgemeinen mit Lösungen von Polyimiden oder Polyamidsäuren beschichtet, wobei im Falle der Polyamidsäure die Imidisierung dann auf der Substratoberfläche erfolgt.

Die Lösungen von Polyimiden und Polyamidsäuren müssen jedoch relativ niedrigkonzentriert sein, damit sich eine für die Verarbeitung ausreichend geringe Viskosität einstellt. Typische Handelsprodukte haben in der Regel nur 12 bis 20 Gew.-% Feststoffgehalt.

Aus der niedrigen Konzentration ergibt sich ein hoher Schrumpf bei der Trocknung. Dieser Schrumpf führt zu einer mehr oder weniger starken Abformung der unter der Polyimid-Schicht liegenden Struktur in die Polyimid-Oberfläche.

Vor allem bei z. B. für Schaltungen notwendigem mehrlagigen Beschichtungen ergeben sich Ungenauigkeiten im Aufbau.

Aus diesem Grunde sowie zur Vermeidung von zu großen Lösungsmittelmengen sind höher konzentrierte Lösungen erwünscht. Höhere Konzentrationen sind prinzipiell möglich mit Lösungen, welche lediglich die Ausgangsstoffe für die Polyimide enthalten. Da Lösungen von Tetracarbonsäuredianhydriden und Diaminen jedoch nicht lagerstabil sind und mit der Zeit polymerisieren, werden statt der Tetracarbonsäuredianhydride Tetracarbonsäurediester eingesetzt.

Aus den US-A-3 502 712 und US-A-3 542 703 ist bekannt, Lösungen von Diaminen und Tetracarbonsäurediestern, wobei sich die Ester von Alkanolen oder Phenol ableiten, zur Herstellung von Polyimidschäumen zu verwenden.

In der US-A-3 700 649 werden Lösungen von Benzophenontetracarbonsäurediestern und Diaminen mit einer sehr geringen Basizität zur Herstellung von Polyimidbeschichtungen beschrieben. Als Alkohole für die Veresterung werden Alkanole und Benzylalkohol genannt.

Bei den aus der US-A-3 347 808 bekannten Lösungen aus Tetracarbonsäurediestern und Diaminen werden lediglich Alkanole als Veresterungskomponente eingesetzt.

Die US-A-4 874 835, betrifft Lösungen von Diaminen und Diestern von Oxydiphthalsäure mit Alkanolen.

Aus der US-A-4 960 824, sind Lösungen von Diestern araliphatischer Tetracarbonsäuren mit Alkanolen und mindestens einem Diamin ausgewählt aus m-Phenylendiamin, p-Phenylendiamin oder 4-Aminophenylether bekannt.

Polyimidbeschichtungen, welche aus Lösungen der Ausgangsstoffe hergestellt werden, weisen bisher jedoch noch vielfältig Nachteile wie Blasenbildung und ungenügende Planarität der Beschichtungen auf.

In EP-A-409 777 werden polyimidbildende Lösungen aus Teilestern aromatischer Tetracarbonsäuren, aromatischen Diaminen und thermoaktivierbaren Säurespendern beschrieben, um damit Verbundwerkstoffe mit wenig Hohlräumen herzustellen. Die Herstellung von hochkonzentrierten Lösungen mit niedriger Viskosität, um damit glatte Überzüge mit geringem Schrumpf zu erhalten, ist jedoch mit diesen Gemischen nicht möglich.

Die US-A-4 533 574 betrifft polyimidbildende Lösungen aus Teilestern ausgewählter aromatischer Tetracarbonsäuren mit flüchtigen Alkoholen und Polyamidsäuren, die aus noch in der Lösung enthaltenen Tetracarbonsäureanhydriden zwangsläufig durch Umsetzung mit aromatischen Diaminen in Gegenwart von Salzen von Tetraaminen mit flüchtigen Carbonsäuren in aprotischen Lösungsmitteln entstehen. Diese Lösungen dienen zur Herstellung planarisierender Schichten in der Elektronik. Gemäß dieser Schrift sind nur spezielle "flexible" Tetracarbonsäuren und Diamine verwendbar, die dann lösliche Polyimide bilden. Um trotzdem unlösliche Polyimide zu erhalten, ist die Mitverwendung der Tetracarbonsäuresalze als Vernetzer notwendig. Die Möglichkeit "unflexible" Ausgangsstoffe, wie Pyromellithsäureanhydrid und Paraphenylendiamin zu verwenden, wird hier ausdrücklich ausgeschlossen.

In der Elektronik sind jedoch insbesondere Polyimide auf Basis von p-Phenylendiamin/Pyromellithsäureanhydrid wegen ihres geringen thermischen Ausdehnungskoeffizienten und ihrer hervorragenden dielektrischen Eigenschaft erwünscht, während Polyimide auf Basis von "flexiblen" Ausgangsstoffen nur in wenigen Anwendungen einsetzbar sind.

Aufgabe der vorliegenden Erfindung war es daher, diesen Nachteilen abzuhelfen.

Demgemäß wurden die eingangs definierten Lösungen sowie ihre Verwendung zur Herstellung von Polyimidbeschichtungen gefunden.

Unter Überwindung des durch die in der US-A-4 533 574 enthaltenen Lehren gegebenen technischen Vorurteils macht die vorliegende Erfindung polyimidbildende Lösungen mit hohem Feststoffgehalt auf Basis der in der Elektronik bevorzugten unflexiblen Ausgangsstoffe durch die zur Veresterung eingesetzten speziellen Alkohole verfügbar. Diese Lösungen eignen sich sehr gut zur Planarisierung.

Die erfindungsgemäßen Lösungen enthalten Tetracarbonsäurediester und Diamine als Ausgangsstoffe für Polyimide.

Als Tetracarbonsäurediester kommen insbesondere solche in Betracht, die sich von aromatischen oder teilaromatischen Tetracarbonsäuredianhydriden mit mindestens einem aromatischen Ring ableiten. Es kann sich dabei um Tetracarbonsäurediester mit einem aromatischen Ring, mit kondensierten aromatischen Ringsystemen oder aromatischen Ringen, die z. B. durch eine Einfachbindung, eine Ether-, Carbonyl-, Sulfonylgruppe oder aliphatische Kohlenstoffreste, insbesondere mit 1 bis 8 Kohlenstoffatomen und gegebenenfalls auch Heteroatomen wie Sauerstoff, Schwefel oder Stickstoff verbunden sind, handeln. Die aromatischen Ringe bzw. Ringsysteme können als Substituenten insbesondere C₁- bis C₆-Alkyl- oder -Alkoxygruppen oder Halogenatome, wie Chlor und Fluor tragen.

Beispielsweise zu nennen sind folgende Tetracarbonsäuredianhydride von denen sich die Tetracarbonsäurediester ableiten:
2,3,9,10-Perylentetracarbonsäuredianhydrid, 1,4,5,8-Naphthalintetracarbonsäuredianhydrid, 2,6-Dichlornaphthalin-1,4,5,8-tetracarbonsäuredianhydrid, 2,7-Dichlornaphthalin-1,4,5,8-tetracarbonsäuredianhydrid Phenanthren-1,8,9,10-tetracarbonsäuredianhydrid, Pyromellithsäuredianhydrid, 3,3',4,4'-Biphenyltetracarbonsäuredianhydrid, 2,2',3,3'-Biphenyltetracarbonsäuredianhydrid, 4,4'-Isopropylidendiphthalsäuredianhydrid, Hexafluoroisopropyliden-2, 2-bisphthalsäureanhydrid, 3,3'-isopropylidendiphthalsäuredianhydrid, 4,4'-Oxydiphthalsäuredianhydrid, 4,4'-Sulfonyldiphthalsäuredianhydrid, 3,3'-Oxydiphthalsäuredianhydrid, 4,4'-Methylendiphthalsäuredianhydrid, 4,4'-Thiodiphthalsäuredianhydrid, 4,4'-Acetylidendiphthalsäuredianhydrid, 2,3,6, 7-Naphthalintetracarbonsäuredianhydrid, 1,2,4,5-Naphthalintetracarbonsäuredianhydrid, 1,2,5,6-Naphthalintetracarbonsäuredianhydrid, Benzol-1,2,3,4-tetracarbonsäuredianhydrid, Thiophen-2,3,4,5-tetracarbonsäuredianhydrid, 1-(3',4'-Dicarboxyphenyl)-1,3,3-trimethylindan-5,6-dicarbonsäuredianhydrid, 1-(3',4'-Dicarboxyphenyl)-1,3,3-trimethylindan-6,7-dicarbonsäuredianhydrid, 1-(3',4'-Dicarboxyphenyl)-3-methylidan-5,6-dicarbonsäuredianhydrid, 1-(3',4'-Dicarboxyphenyl)-3-methylindan-6,7-dicarbonsäuredianhydrid) 3,3',4,4'-Benzophenontetracarbonsäuredianhydrid, 4,5,3',4'-Benzophenontetracarbonsäuredianhydrid und 2,2'-Bis[4(3,4-dicarboxyphenoxy)phenyl]-propandianhydrid.

Geeignet sind insbesondere auch Gemische von Tetracarbonsäurediestern. Gemische von Tetracarbonsäurediestern, welche sich von Oxydiphthalsäuredianhydriden, Benzophenontetracarbonsäuredianhydriden, Biphenyltetracarbonsäuredianhydriden oder Hexafluoroisopropyliden-2-2-bisphthalsäuredianhydrid ableiten, haben sich als besonders vorteilhaft erwiesen.

Die Estergruppen in den Tetracarbonsäurediestern leiten sich zumindest zu 2 mol.-%, bezogen auf alle Estergruppen, von Alkoholen der allgemeinen Formel

HO-Z-O-X I

ab, worin Z für einen geradlinigen oder verzweigten aliphatischen Rest aus 1 bis 15, bevorzugt 1 bis 8 Kohlenstoffatomen, welcher durch 1 bis 4, bevorzugt 1-2 Ethergruppen -O- unterbrochen sein kann und X für einen aromatischen Rest aus 5 bis 20 Kohlenstoffatomen, welcher auch Stickstoff, Sauerstoff oder Schwefel im aromatischen Ringsystem enthalten kann, steht. Ganz besonders bevorzugt steht X für einen Phenylring und Z für einen C₁-C₆ Alkylenrest.

Als Alkohole der Formel I zu nennen sind beispielsweise Monophenoxyethylenglycol oder Monophenoxypropylenglycol.

Als weitere Alkohole, von denen sich die Estergruppen in den Tetracarbonsäurediestern ableiten sind vor allem C₁-C₈-Alkanole zu nennen.

Des weiteren können in untergeordneten Mengen auch polyfunktionelle Alkohole eingesetzt werden.

Bevorzugt leiten sich mindestens 10 besonders bevorzugt mindestens 30 mol.-% der Estergruppen in den Diestern von Alkoholen der allgemeinen Formel I ab.

Ganz besonders bevorzugt leiten sich alle Estergruppen in den Diestern von Alkoholen der allgemeinen Formel I ab.

Die Herstellung der Tetracarbonsäurediester kann in einfacher Weise durch Veresterung der Tetracarbonsäuredianhydride mit den oben genannten Alkoholen nach bekannten Methoden erfolgen. Bei der Veresterung werden die Säureanhydridringe gespalten, wobei aus einem Säureanhydridring eine Estergruppe und eine Carbonsäuregruppe hervorgeht. Eine weitere Veresterung der noch verbleibenden Carbonsäuregruppen findet weitgehend nicht statt, so daß Tetracarbonsäuretetra- oder -triester auch bei hohem Überschuß des Alkohols nur in untergeordneten Mengen entstehen. Die Veresterung wird bevorzugt bei Temperaturen zwischen 50 und 150°C durchgeführt. Gegebenenfalls können auch Veresterungskatalysatoren, z. B. Dimethylaminopyridin, zugesetzt werden.

Die Tetracarbonsäurediester können auch nach anderen Methoden, z. B. durch direkte Veresterung der Tetracarbonsäuren hergestellt werden.

Als Diamine kommen insbesondere aromatische oder teilaromatische Diamine, welche mindestens einen aromatischen Ring enthalten, in Betracht. Es kann sich dabei um Diamine mit einem aromatischen Ring, mit kondensierten aromatischen Ringsystemen oder aromatische Ringen, die z. B. durch eine Einfachbindung, eine Ether-, Carbonyl-, Sulfonylgruppe oder aliphatische Kohlenwasserstoffreste, insbesondere mit 1 bis 8 Kohlenstoffatomen und gegebenenfalls auch Heteroatomen wie Schwefel, Stickstoff oder Sauerstoff, verbunden sind, handeln. Die aromatischen Ringe bzw. Ringsysteme können als Substituenten insbesondere C₁- bis C₆-Alkyl- oder -Alkoxygruppen oder Halogenatome wie Chlor und Fluor tragen.

In Betracht kommen z. B.:
Benzidin, Dimethylbenzidin, Dimethoxybenzidin, Diethoxybenzidin, Diaminodiphenylsulfon, Diaminodiphenylpropan, Diaminodiphenylsulfid, 4,4'-Bis[2-(4-aminophenyl)propan]phenylen/Bisanilin P, 4,4'-Dimethyl-3,3'-diaminodiphenylsulfon, 4,4'-Dimethyl-3,3'-diaminodiphenylsulfid, p-Phenylendiamin, m-Phenylendiamin, Diethyltoluylendiamin, Diaminomethoxybenzol, Xylylendiamin, Diaminocumen, Diaminonaphthalin, Diaminonaphthol, Diaminonaphthochinon, Diaminoanthracen, Diaminoanthrachinon, Diaminophenanthren, 9,10-Bis(4-aminophenylanthracen, 3,5-Diethyl-2,4-diaminotoluol, 3,5-Diethyl-2,6-diaminotoluol, Diisopropylphenylendiamin, 4,4'-Methylen-bis-(2,6-diisopropylanilin), 4,4'-Methylen-bis-(2-methyl-6-isopropylanilin), 2,6-Diisopropylanilin, 1,3-Diamino-4-methoxybenzol, Hexafluoro-2,2-bis(3-amino-4,5-dimethylphenyl)propan, 2,2-Bis(4,4'-aminophenyl)-propan, Bis(4,4'-aminophenyl)sulfon, Bis(4,4'-aminophenyl)sulfid, Bis(3,3'-aminophenyl)sulfon, Bis(3,3'-aminophenyl)sulfid, 2,2-Bis[4-(4-aminophenoxy)phenyl]propan, 2,2-Bis[4-(4-aminophenoxy)phenyl]hexafluorpropan, Bis[4-(4-aminophenoxy)phenyl]sulfon, Bis[4-(4-aminophenoxy)phenyl]sulfid, 2,2-Bis[4(3-aminophenoxy)phenyl]hexafluorpropan, Bis[4-(3-aminophenoxy)phenyl]sulfon, Bis-[4-(3-aminophenoxy)phenyl]sulfid, 4,4'-Bis(4-aminophenoxy)biphenyl, 4,4'Bis(3-aminophenoxy)biphenyl, 1,4'-Bis(4-aminophenoxy)phenylen, 1,3'-Bis(4-aminophenoxy)phenylen, Diaminodiphenylmethan, Diaminodiphenoxyphenylsulfon, Diaminodiphenoxyphenylsulfid, Diaminodiphenyloxid, Diaminopyridin, Bis-(4-aminophenyl)dialkylsilane, 3,3'-Dihydroxy-4,4'-diaminobiphenyl, 9,9'-Bis(4-amino)fluoren, o-Toluidinsulfon, Diaminobenzanilid, Acridindiamin und Methylenbisanthranilsäureamid.

Geeignet sind insbesondere auch Gemische von Diaminen.

Als Lösungsmittel für die Tetracarbonsäurediester und Diamine eignen sich z. B. polare organische Lösungsmittel, wie aliphatische oder aromatische Alkohole, Ether, Ketone, Aldehyde oder Ester.

Bevorzugt werden hochpolare Lösungsmittel wie N-Methylpyrrolidon, Formamid, Dimethylformamid, Alkylalkylendiharnstoffe wie Dinethylethylendiharnstoff oder Dimethylpropylendiharnstoff. Dimethylsulfoxid, Butyrolacton, Pyrrolidon, Dialkylacetamid aber auch Glykole, Glykolester und Glycolether verwendet.

Als Lösungsmittel empfiehlt sich naheliegenderweise auch der bei der Herstellung der Tetracarbonsäurediester üblicherweise im Überschuß eingesetzte Alkohol.

Die Wahl des Lösungsmittels oder Lösungsmittelgemisches hängt im wesentlichen nur von der Löslichkeit, bzw. der Polarität der Tetracarbonsäurediester und Diamine ab.

Gegebenenfalls können auch nichtpolare Lösungsmittel wie aliphatische oder aromatische Kohlenwasserstoffe in Lösungsmittelgemischen Mitverwendung finden.

Die erfindungsgemäßen Lösungen enthalten den Tetracarbonsäuredieester und das Diamin vorzugsweise im Molverhältnis von 1,5:1 bis 1:1,5, besonders bevorzugt ist das Molverhältnis von ca. 1:1.

Der Feststoffgehalt der Lösungen beträgt vorzugsweise 30 bis 60 Gew.-%.

Zur Herstellung der Lösungen können Tetracarbonsäurediester, Diamin und Lösungsmittel in beliebiger Reihenfolge zusammengegeben werden. Zum Beispiel ist es möglich zunächst den Tetracarbonsäurediester durch Umsetzung eines Tetracarbonsäuredianhydrids mit einem Überschuß an Alkohol herzustellen und zum erhaltenen Gemisch das Diamin und gegebenenfalls weiteres Lösungsmittel zu geben. Um alle Komponenten in Lösung zu bringen wird, falls erforderlich, bei Raumtemperatur oder auch erhöhter Temperatur, z. B. zwischen 30 und 120°C, insbesondere 40-80°C, gerührt.

Die erfindungsgemäßen Lösungen können übliche Zusatzstoffe, wie Katalysatoren für die Imidbildung, Farbstoffe, Pigmente, Füllstoffe, Verlaufsmittel und viskositätsregulierende Stoffe enthalten.

Sie eignen sich als Beschichtungsmittel zur Herstellung von Überzügen auf unterschiedlichsten Substraten, z. B. Metall, Glas oder Silicium. Die Härtung der Beschichtung erfolgt vorzugsweise bei Endtemperaturen zwischen 150° und 450°C, besonders bevorzugt zwischen 300 und 400°C. Es hat sich als besonders vorteilhaft erwiesen den Härtungsprozeß mehrstufig durch stufenweises Erhöhen der Temperatur bis zur Endtemperatur durchzuführen.

Mit den erfindungsgemäßen Lösungen können auch in großer Schichtdicke blasenfreie, planare Beschichtungen hergestellt werden.

### Beispiele

### Abkürzungen

- ODPA: Oxydiphthalsäuredianhydrid
- PMDA: Pyromellithsäuredianhydrid
- BTDA: Benzophenontetracarbonsäuredianhydrid
- BAPP-DA: 2,2'-Bis[4(3.4-dicarboxyphenoxy)phenylpropandianhydrid

- DADO: Diaminodiphenyloxid
- BAPP: 2,2-Bis[-(4-aminophenoxy)phenyl]propan
- m-PDA: m-Phenylendiamin
- p-PDA: p-Phenylendiamin

- MEG: Monophenoxyethylenglykol
- MPG: Monophenoxypropylenglykol
- E: Ethylalkohol
- M: Methanol
- S 100: Solvesso® 100 (C₁- bis C₆-Alkylbenzolgemisch der Firma Esso)

- DMAP: Dimethylaminopyridin
- NMP: N-Methylpyrrolidon
- DMAC: Dimethylacetamid
- BLAC: Butyrolacton

### Beispiele 1 bis 8

Das Tetracarbonsäuredianhydrid wurde mit einem Alkohol und Lösungsmittel 30 Minuten bei 110°C gerührt. Nach dem Abkühlen wurde das Diamin und weiteres Lösungsmitel zum entstandenen Tetracarbonsäurediester gegeben und gerührt, bis eine Lösung entstanden war.

### Einsatzstoffe:

### Beispiel 1

| | |
|---|---|
| 31.03 g | ODPA (0.1 Mol) |
| 41.45 g | MEG (0.3 Mol) |
| 30.00 g | NMP |
| 0.50 g | DMAP |
| 20.01 g | DADO (0,1 Mol) |
| 34.86 g | NMP |

### Beispiel 2

| | |
|---|---|
| 32.23 g | BTDA (0.1 Mol) |
| 45.66 g | MPG (0.3 Mol) |
| 30.00 g | NMP |
| 0.50 g | DMA |
| 20.01 g | DADO (0.1 Mol) |
| 37.45 g | NMP |

### Beispiel 3

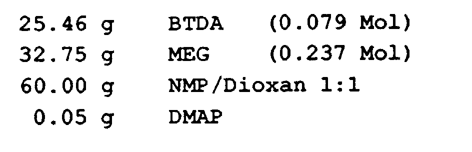

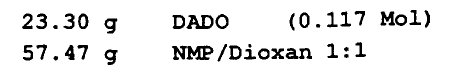

### Beispiel 4

| | |
|---|---|
| 25.46 g | BTDA (0.079 Mol) |
| 32.75 g | MEG (0.237 Mol) |
| 40.00 g | NMP |
| 0.05 g | DMAP |
| 23.30 g | DADO (0.117 Mol) |
| 30.00 g | NMP |
| 31.09 g | Solvesso 100 |

### Beispiel 5

| | |
|---|---|
| 21.83 g | PMDA (0.1 Mol) |
| 45.66 g | MPG (0.3 Mol) |
| 30.00 g | NMP/Butyrolakton 1:1 |
| 0.05 g | DMAP |
| 10.80 g | p-PDA (0.1 Mol) |
| 17.82 g | NMP/Butyrolakton 1:1 |

### Beispiel 6

| | |
|---|---|
| 32.23 g | BTDA (0.1 Mol) |
| 45.66 g | MPG (0.3 Mol) |
| 30.00 g | NMP/Butyrolakton 1:1 |
| 0.50 g | DMAP |
| 10.80 g | p-PDA (0.1 Mol) |
| 28.25 g | NMP/Butyrolakton |

### Beispiel 7

| | |
|---|---|
| 31.03 g | ODPA (0.1 Mol) |
| 45.66 g | MPG (0.3 Mol) |
| 30.00 g | NMP |
| 0.50 g | DMAP |
| 5.40 g | p-PDA (0.05 Mol) |
| 5.40 g | m-PDA (0.05 Mol |
| 16.64 g | NMP |

### Vergleichsbeispiele 1 bis 2

Tetracarbonsäurediester, Lösungsmittel und Diamin wurden gemischt und gerührt bis eine Lösung entstanden war.

### Einsatzstoffe:

### Vergleichsbeispiel 1 (nach US 3 347 808):

| | |
|---|---|
| 32.50 g | BTDA-Diethylester (0.079 Mol) |
| 76.00 g | Dioxan/NMP 1:1 |
| 23.30 g | DADO (0.117 Mol) in |
| 54.00 g | Dioxan/NMP. |

### Vergleichsbeispiel 2 (nach US 3 347 808)

| | |
|---|---|
| 32.50 g | BTDA-Diethylester (0.079 Mol) |
| 64.7 g | Aceton |
| 16.30 g | DADO (0.117 Mol) in |
| 67.50 g | Kresol. |

### Vergleichsbeispiel 3 bis 7

Das Tetracarbonsäuredianhydrid wurde zunächst mit Methanol 2 Std. unter Rückfluß gekocht. Nach Abkühlen wurde das Diamin zugesetzt und gerührt bis eine Lösung entstanden war.

### Einsatzstoffe

### Vergleichsbeispiel 3 (nach US 4 874 835)

| | |
|---|---|
| 33.48 g | ODPA (0.1079 Mol) |
| 47.00 g | Methanol (1.4700 Mol) |
| 3.891 g | p-PDA (0.03598 Mol) |
| 3.891 g | m-PDA (0.03598 Mol) |
| 7.205 g | DADO (0.03598 Mol) |

### Vergleichsbeispiel 4 (nach US 4 874 835)

| | |
|---|---|
| 32.26 g | ODPA (0.1040 Mol) |
| 43.00 g | Methanol (1.3400 Mol) |
| 5.623 g | p-PDA (0.052 Mol) |
| 5.623 g | m-PDA (0.052 Mol) |

### Vergleichsbeispiel 5 (nach US 4 960 824)

| | |
|---|---|
| 52.00 g | BAPP-DA (0.10 Mol) |
| 62.80 g | Methanol (1.96 Mol) |
| | 120 Min. kochen, dann Zugabe von |
| 10.8 g | p-PDA (0,1 Mol) |

### Vergleichsbeispiel 6 (nach US 4 960 824)

| | |
|---|---|
| 21.80 g | PMDA (0.10 Mol) |
| 32.00 g | Methanol (1.02 Mol) |
| 10.80 g | p-PDA (0.10 Mol) |

### Vergleichsbeispiel 7 (nach US 4 960 824)

| | |
|---|---|
| 32.23 g | BTDA (0.10 Mol) |
| 42.88 g | Methanol (1.34 Mol) |
| 10.80 g | p-PDA (0.10 Mol) |

### Prüfung der Lösungen auf Filmbildung

Die Lösungen wurden mit einer Rakel mit einem keilförmigen Spalt auf entfettete Stahlbleche aufgetragen. Die Beschichtungen wurden mit einer Rate von 5°C/Minute in einem programmgesteuerten Ofen auf 350°C aufgeheizt und bei dieser Temperatur 30 Minuten gehalten.

Ab einer bestimmten Schichtdicke traten bei den Beschichtungen Blasen auf. In der Tabelle ist die Schichtdicke dₘₐₓ angegeben, bis zu der keine Blasen zu beobachten waren.

Weiterhin wurde das Aussehen, insbesondere die Planarität der Filme an den blasenfreien Stellen verglichen und das elastische Verhalten der Filme durch Biegen der Bleche über eine scharfe Kante beurteilt. (Tabelle)

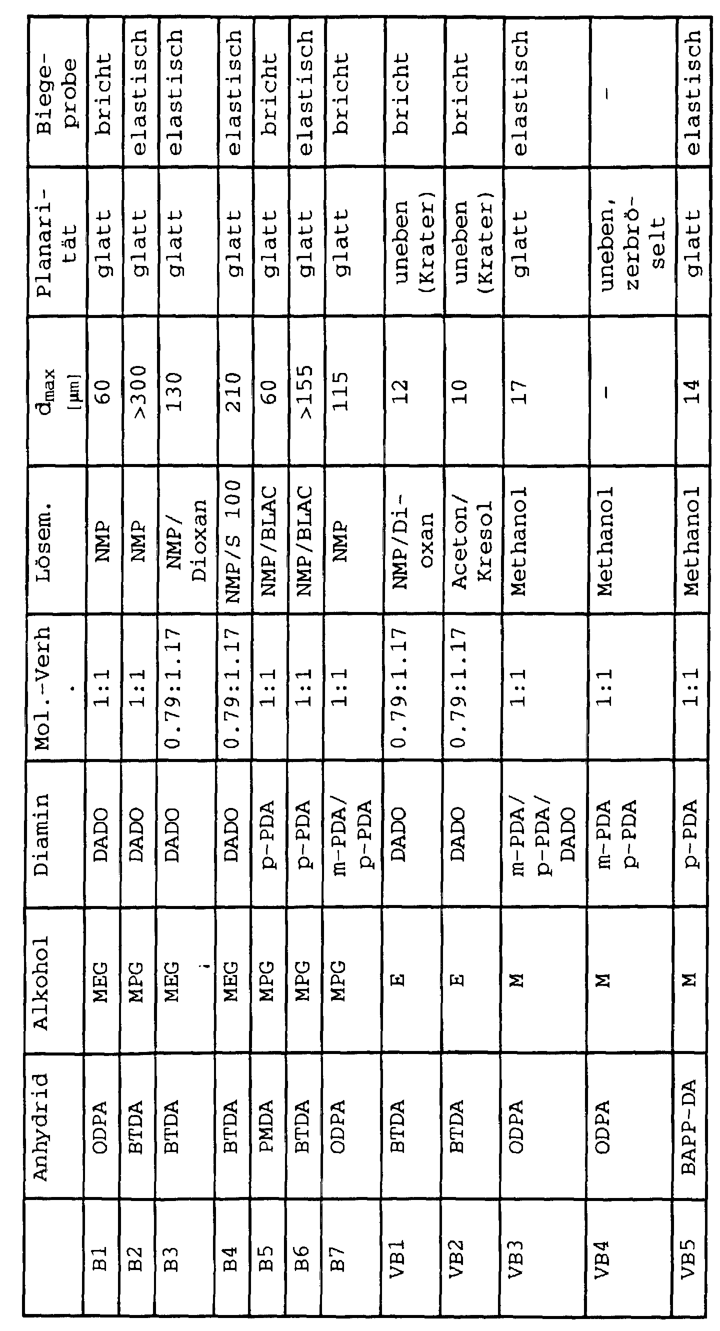

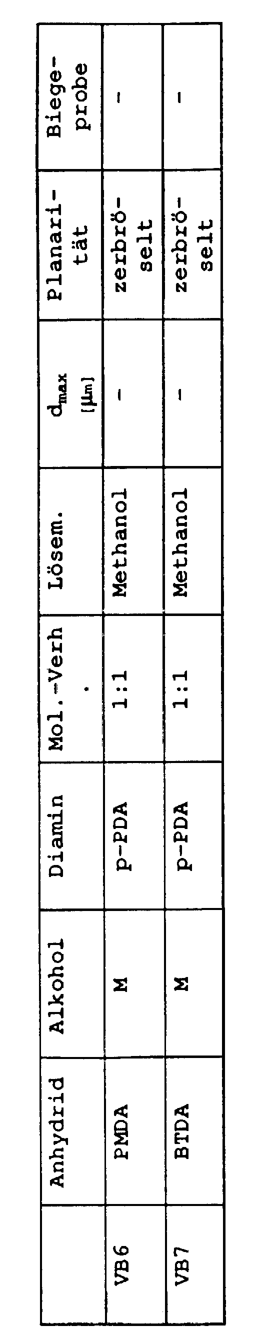

## Patentansprüche

1. Lösungen von polyimidbildenden Ausgangsstoffen, enthaltend Diamine und Tetracarbonsäurediester, wobei sich mindestens 2 mol.-% der Estergruppen in den Tetracarbonsäurediestern von Alkoholen der allgemeinen Formel
HO-Z-O-X I
ableiten, worin Z für einen geradkettigen oder verzweigten aliphatischen Rest aus 1 bis 15 Kohlenstoffatomen, welcher durch 1 bis 4 Ethergruppen -0- unterbrochen sein kann und X für einen aromatischen Rest aus 5 bis 20 Kohlenstoffatomen, welcher auch Stickstoff, Sauerstoff oder Schwefel als Heteroatome im aromatischen Ringsystem enthalten kann, steht.

2. Verwendung von Lösungen von polyimidbildenden Ausgangsstoffen gemäß Anspruch 1 zur Herstellung von Überzügen.

## Claims

1. Solutions of polyimide-forming starting materials, comprising diamines and tetracarboxylic diesters, wherein at least 2 mol% of the ester groups in the tetracarboxylic diesters are derived from alcohols of the general formula
HO-Z-O-X I
where Z is a straight-chain or branched aliphatic radical of from 1 to 15 carbon atoms which can be interrupted by from 1 to 4 ether groups -O- and X is an aromatic radical of from 5 to 20 carbon atoms which can also contain nitrogen, oxygen or sulfur as hetero atoms in the aromatic ring system.

2. The use of solutions of polyimide-forming starting materials as claimed in claim 1 for preparing coatings.

## Revendications

1. Solutions de produits de départ formant des polyimides, contenant des diamines et des diesters d'acides tétracarboxyliques, au moins 2 moles % des groupes ester dans les diesters d'acide tétracarboxylique dérivant d'alcools de formule générale
HO-Z-O-X I
où Z est mis pour un reste aliphatique à chaîne longue ou ramifiée de 1 à 15 atomes de carbone, qui peut être interrompue par 1 à 4 groupes éther-O- et X est mis pour un reste aromatique de 5 à 20 atomes de carbone qui peut contenir aussi de l'azote, de l'oxygène ou du soufre comme hétéroatome dans le système cyclique aromatique.

2. Utilisation de solutions de produits de départ formant des polyimides selon la revendication 1 pour la préparation de revêtements.
